# EUROPÄISCHE PATENTSCHRIFT

(11) **EP 2 415 632 B1**
(45) Veröffentlichungstag und Bekanntmachung des Hinweises auf die Patenterteilung: **12.12.2012**
(21) Anmeldenummer: 11175774.6
(22) Anmeldetag: 28.07.2011
(51) Int. Cl.: B60N 2/50, B60N 2/54, B60N 2/38, B60N 2/24, B62D 33/06

(54) **Horizontalfederung mit Neigungsausgleich**
Horizontal suspension with inclination compensation
Suspension horizontale avec compensation d'inclinaison

(30) Priorität: 02.08.2010 DE 102010033028
(43) Veröffentlichungstag der Anmeldung: 08.02.2012
(73) Patentinhaber: GRAMMER AG, 92224 Amberg (DE)
(72) Erfinder: Kolb, Jens, 92281 Königstein (DE)
(74) Vertreter: Hannke, Christian

(56) Entgegenhaltungen:
- EP-A1- 1 652 724
- EP-A2- 1 577 156
- US-A- 5 014 960

## Beschreibung

Die vorliegende Erfindung bezieht sich auf eine Fahrzeugschwingungsvorrichtung mit einer Horizontalfedereinrichtung zur horizontalen Federung eines Sitzelementes und/oder einer Fahrerkabine in Bezug auf ein Basiselement gemäß dem Oberbegriff des Anspruches 1.

Jedes Fahrzeug wird im Laufe seiner Nutzung nicht nur auf einer horizontal ausgerichteten Fahrbahn betrieben, sondern muss unter Umständen auch enorme Steigungen bzw. Gefälle des Geländes sowie auch kleine Unebenheiten der Fahrbahn, wie diese beispielsweise bei Schlaglöchern auftreten können, überwinden.

Dabei wird der Fahrzeugführer, wie auch ein möglicher Beifahrer bzw. Mitfahrer nicht unerheblichen Stößen und Positions- und Richtungsänderungen im Fahrzeug ausgesetzt, die ein Sitz, insbesondere ein Passagiersitz bzw. eine Fahrerkabine ausgleichen muss, um den Sitzkomfort für den Passagier auch bei unebener Fahrbahn zu gewährleisten.

Insbesondere Schwingungen und Stöße quer zur Fahrtrichtung können mit einer Quer- bzw. Seitenhorizontalfederung gedämpft werden, um den Rücken vor ungesunden Erschütterungen zu schützen, während Schwingungen bei schneller Fahrt oder in sehr hügeligem Gelände von einer Längshorizontalfederung minimiert werden können.

Aus dem Stand der Technik sind vor allem Puffer- und Federungssysteme zur Abfederung von Stößen vertikal zur Fahrbahn hinreichend bekannt, wobei jedoch die auftretenden Horizontalkräfte in Längs- und/oder in Querrichtung zur Fahrtrichtung, welche einen Passagier beispielsweise beim Bergauffahren oder bei einer Beschleunigung des Fahrzeuges gegen die Rückenlehne des Fahrzeugsitzes pressen oder ihn beispielsweise beim Bergabfahren oder während eines Bremsvorganges in Richtung des Lenkrades schieben nicht berücksichtigt werden.

Eine Horizontalfederungseinrichtung in Fahrzeugsitzen wird beispielsweise in der DE 35 17 345 C2 beschrieben, in welcher eine Schraubzugfeder in Federlängsrichtung vertikal zwischen die Sitzfläche und die Bodenfläche eines Fahrzeugsitzes gespannt ist und mittels eines zweiteiligen Elementes, welches zwischen den beiden ortsfesten Enden der Schraubzugfeder, d.h. zwischen dem einen Ende, welches an der Sitzfläche und dem anderen Ende, welches an der Bodenfläche des Fahrzeugsitzes befestigt ist, an dieser Schraubzugfeder in horizontaler Richtung beidseitig angeordnet ist. Dieses zweiteilige Element ist über ein Verbindungselement mit dem Auflager der Sitzplatte des Fahrzeugsitzes verbunden und wird bei Auslenkungen des Sitzes derart beaufschlagt, dass sich das Element hin horizontaler Richtung gegen die gespannten Windungen der Schraubzugfeder, d.h. senkrecht zur Federausdehnungslängsrichtung drückt. Dementsprechend wird die Schraubzugfeder erhöhten Querbelastungen ausgesetzt, wobei diese Federeinrichtung lediglich in eine einzige horizontale Richtung federn kann, um beispielsweise als Längs- oder als Querhorizontalfederung zu wirken.

Auch in der DE 102 06 223 B4 wird eine horizontale Federung beschrieben, welche jedoch aus zwei Federelementen besteht, welche derart an den Scherenarmen des Scherengestelles bzw. an den Bereichen des Sitzelementes angeordnet sind, dass bei einer Auslenkung des Sitzes aufgrund von Beschleunigungs- oder Verzögerungsgeschwindigkeiten die einzelnen Federelemente auf Druck bzw. auf Zug beansprucht werden, damit das Sitzelement in Bezug auf das Grundelement in Längsrichtung horizontal federnd beweglich ist. Ein Ausgleich von seitlichen Stößen beispielsweise mittels einer Querhorizontalfederung kann diese Horizontalfederungsvariation nicht realisieren.

EP 1 652 724 A1 ist eine Fahrzeugschwingungsvorrichtung mit einer Horizontalfedereinrichtung, bei der ein Federelement vorhanden ist, dessen Federlängsachse sich im Wesentlichen parallel zu einer Oberfläche des Basiselementes erstreckt.

Folglich liegt der vorliegenden Erfindung die Aufgabe zu Grunde eine Fahrzeugschwingungsvorrichtung mit einer Horizontalfedereinrichtung für ein Sitzelement bzw. für eine Fahrerkabine, beispielsweise für ein Nutzfahrzeug, einen Traktor oder einen Gabelstapler zur Verfügung zu stellen, die kostengünstig in der Herstellung ist, einen geringen Platzbedarf erfordert, wirksam arbeitet und dabei gleichzeitig mechanisch einfach zur realisieren ist, wobei im Wesentlichen gleichermaßen eine Längshorizontalfederung, wie auch eine Querhorizontalfederung realisiert wird.

Diese Aufgabe löst die vorliegende Erfindung mittels einer Fahrzeugschwingungsvorrichtung mit einer Horizontalfedereinrichtung zur horizontalen Federung eines Sitzelementes und/oder einer Fahrerkabine in Bezug auf ein Basiselement, wobei die Horizontalfedereinrichtung zwischen dem Sitzelement bzw. der Fahrerkabine und dem Basiselement angeordnet ist und mindestens ein Federelement, dessen Federlängsachse sich im Wesentlichen parallel zu einer Oberfläche des Basiselementes erstreckt, und mindestens ein auf Neigungen des Sitzelementes in Bezug auf eine Horizontalebene automatisch reagierendes Verstellelement, welches zuerst die Federvorspannung des Federelementes erhöht, um danach die Horizontalfedereinrichtung in die Federwegsmitte zu positionieren, umfasst.

Die erfindungsgemäße Fahrzeugsschwingungsvorrichtung dient folglich bevorzugt zum Ausgleich der Längs- und/oder Querkräfte mittels einer Längs- und Querhorizontalfedereinrichtung, welche in oder an einer Fahrerkabine oder auch in oder an einem Passagiersitz angeordnet ist, um auch in einem Nutzfahrzeug, einem Traktor, einem Bagger etc. einen Fahrzeugsitz bzw. eine Fahrerkabine zur Verfügung zu stellen, der bzw. die nahezu den Federungskomfort eines Pkw-Sitzes bietet.

Dementsprechend können Stöße und Positions- bzw. Richtungsänderungen, welche auf den Passagier während des Fahrens des Fahrzeuges aufgrund von Unebenheiten im Gelände bzw. Steigungen oder Gefälle der Fahrbahn wirken von Sitzen bzw. Fahrerkabinen mit angeordneter oder integrierter erfindungsgemäßer Fahrzeugschwingungsvorrichtung mit Horizontalfederung ausgeglichen werden. Folglich wird der Passagier vor ungesunden Einwirkungen auf beispielsweise dessen Rücken aufgrund von Schwingungen und Stößen längs sowie quer zur Fahrtrichtung geschützt, indem die Auslenkungen des Sitzes minimiert werden und im Wesentlichen stetig derart reduziert werden, dass zu jeder Zeit ein ausreichender Federweg zur Federung des Sitzes zur Verfügung steht.

Weiterhin ist es möglich mittels der erfindungsgemäßen Fahrzeugschwingungsvorrichtung mit Horizontalfederung, die in oder an einem Fahrzeugsitz bzw. einer Fahrerkabine angeordnet ist der EU-Richtlinie 2002/44/EWG zu entsprechen, die unter anderem besagt, dass die Gesundheit der Arbeitnehmer vor der Gefährdung durch physikalische Einwirkungen geschützt werden muss, wodurch auch die maximal täglich zumutbaren Schwingungsexpositionen geregelt werden müssen, denen ein Arbeitnehmer ausgesetzt wird.

Ermöglicht wird die Korrektur der Auslenkung des Sitzes, wobei anstatt einem Sitz auch eine komplette Fahrerkabine horizontal federnd gelagert sein kann, mittels mindestens eines Federelements, welches bevorzugt eine Spiralfeder ist, sowie einem automatisch reagierenden Verstellelement

Das automatisch reagierende Verstellelement, welches auf jede Auslenkung des Sitzes aus seiner Gleichgewichtslage bzw. Neigung des Sitzes gegenüber einer Horizontalebene derart automatisch reagiert, dass das Federelement mit einer zusätzlichen Kraft, welche im Wesentlichen in Federausdehnungslängsrichtung auf das Federelement einwirkt, beaufschlagt wird, kann entweder ein selbsttätig agierendes Element bzw. ein elektronisches oder elektrisch angesteuertes Element sein.

Demzufolge kann das Verstellelement zusätzlich oder anstatt den mechanischen Bauteilen, welche direkt an dem Federelement angeordnet sind, Bauteile aufweisen, die beispielsweise Signale einer Bewegung des Sitzelementes in Bezug auf ein Basiselement empfangen, um eine gerichtete Bewegung des Verstellelementes zu bewirken. Diese Bauteile sind beispielsweise Sensoren, einfache Wegaufnehmer oder Aktuatoren.

Das Basiselement ist hierbei eine Grundfläche des Sitzes bzw. der Fahrerkabine, mit welcher der Sitz bzw. die Fahrerkabine an dem Fahrzeug bzw. an der Fahrzeugbodenoberfläche im Innenraum eines Fahrzeuges angeordnet und bevorzugt befestigt ist. Die Grundfläche kann dabei die in vertikaler Richtung gesehene unterste Ebene des Sitzes bzw. des Sitzgestelles bzw. des Sitzfußes sein und ist in einer Ausgangsposition, in welcher der Sitz noch nicht ausgelenkt oder geneigt wurde im Wesentlichen parallel zur Sitzfläche des Sitzes ausgerichtet. Das Basiselement kann ebenso aus Schienen bzw. Führungen bestehen, die an der Fahrzeugbodenoberfläche angeordnet sind und in denen der Fahrzeugsitz zumindest zeitweise in Richtung der Fahrzeuglängsrichtung bzw. der Fahrtrichtung verschiebbar gelagert ist, um beispielsweise den Abstand des Sitzes zum Lenkrad variabel einstellen zu können.

In einer bevorzugten Ausführungsform ist das automatisch reagierende Verstellelement ein Pendel und somit ein selbsttätig agierendes Element, welches ohne eine Ansteuerung eines zusätzlichen Elementes automatisch auf die unterschiedlichen Bewegungen des Sitzes reagiert. Das Pendel weist bevorzugt eine Pendelmasse und ferner einen Pendelschenkel auf und ist mit seinem der Pendelmasse gegenüberliegendem Ende beispielsweise mit einem Ende des Federelementes bzw. der Federelemente verbunden, wobei das Pendel auch an einer beliebigen Windung des Federelementes angeordnet sein kann. Weist das Pendel einen Pendelschenkel auf, dann beabstandet dieser die Pendelmasse von dem Ende, mit welchem das Pendel an dem Federelement angeordnet ist, wobei der Pendelschenkel in seiner Längsausrichtung eine Gerade bildet, wodurch sich das Pendel zumindest in einer Ausgangsposition senkrecht zur Federlängsachse ausrichtet.

Als Ausgangsposition wird hierbei eine Position verstanden, in welcher der Sitz keine Auslenkung aus seinem zum Sitzgestell ausgerichteten Schwerpunkt bzw. Mittelpunkt sowie keine Neigung zur Horizontalebene erfährt. In der Ausgangsposition weist das mindestens eine Federelement zumindest zeitweise im Wesentlichen keine Federkonstante, welche das Maß für die Zug- oder Druckkraft einer Feder darstellt, auf, um das Eigenfrequenzverhalten des Federelementes zumindest zeitweise nicht zu beeinflussen.

Weiterhin ist das Pendel bevorzugt in einem Drehpunkt an einem Anordnungselement oder bevorzugt an einem Auflageelement drehbar gelagert, so dass zumindest abschnittsweise die Pendelmasse sowie bei Vorhandensein eines Pendelschenkels auch zumindest Abschnitte des Pendelschenkels frei um den Drehpunkt schwingen können.

Die Pendelmasse bzw. auch der Pendelschenkel, der folglich die Pendelmasse von dem Drehpunkt beabstandet und im Wesentlichen einen Hebelarm erzeugt, schwingen im Bereich des Sitzgestelles um den Drehpunkt, wobei die Schwingkurve beidseitig jeweils nur durch die Berührung der Pendelmasse bzw. des Pendelschenkels mit dem mindestens einen Federelement begrenzt wird.

Wird der Drehpunkt, also der Punkt in welchem das Pendel am bzw. im Auflageelement oder am bzw. im Anordnungselement drehbar gelagert ist mit dem Massenmittelpunkt des Pendelgewichtes bzw. der Pendelmasse durch eine Linie miteinander verbunden, so entsteht eine Gerade, welche das Bestreben hat sich immer senkrecht zur Horizontalebene auszurichten, was einer Ausrichtung des Pendels bzw. der Pendelmasse zum Erdmittelpunkt entspricht, da das Pendelgewicht aufgrund der Erdanziehungskraft zumindest zeitweise angezogen wird. Demnach wird die Pendelmasse aufgrund der Erdanziehungskraft stets so ausgerichtet, dass die oben beschriebene Gerade senkrecht zur Horizontalebene, jedoch bei einer Neigungen des Sitzes bzw. der Fahrerkabine in Bezug auf die Horizontalebene nicht zwingend senkrecht zum Basiselement ausgerichtet ist.

Unter dem Begriff der Horizontalebene wird hierbei der mathematische Horizont verstanden, der eine Schnittlinie der Himmelskugel mit einer Ebene, die im Beobachtungsort senkrecht zur Lotrichtung ist, bildet. Somit sind Neigungen oder auch Gefälle eines Geländes Ebenen, die nicht der Horizontalebene, entsprechen bzw. nicht parallel zur Horizontalebene ausgerichtet sind, sondern in einem Winkel je nach dem Grad des Gefälles bzw. der Neigung zu der Horizontalebene ausgerichtet sind.

Die Steigung wird vorzugsweise auch als Anstieg bezeichnet und ist ein Maß für die Steilheit einer Geraden bzw. einer Kurve und stellt damit den Bereich eines Geländes dar, den ein Fahrzeug aufwärts fährt, beispielsweise beim Bergauffahren.

Das Gefälle selbst ist der negative Wert der Steigung und stellt damit beispielsweise den Bereich eines Geländes dar, den ein Fahrzeug abwärts fährt, wie z.B. beim Bergabfahren.

Eine Ausrichtung des Pendelgewichtes senkrecht zur Horizontalebene führt, bei auftretender Neigung des Sitzes bzw. der Fahrerkabine in Bezug auf die Horizontalebene, zu einer Auslenkung der an dem Pendel angeordneten Federelemente. Währenddessen die Federelemente, welche beispielsweise in oder an einem Anordnungselement derart angeordnet sind, dass zumindest ein Ende jedes Federelementes mit dem Anordnungselement im Wesentlichen fest verbunden ist, während das andere Ende mit dem Pendel fest verbunden ist, der Bewegung des Anordnungselementes, welches der Bewegung des Sitzelementes entspricht, derart folgen, dass diese entsprechend in Federausdehnungslängsrichtung gedehnt oder gestaucht werden.

Eine Auslenkung oder Neigung des Sitzes erfolgt aufgrund einer Beschleunigung oder Verzögerung der Bewegung des Fahrzeuges sowie aufgrund einer Steigung oder eines Gefälles oder aufgrund von Unebenheiten im Gelände. Dadurch wird der Sitz aus seiner Ausgangsposition bewegt, wodurch ebenfalls die Federelemente in die Richtung bewegt werden, in welche das Sitzelement ausgelenkt wird. Dies erfolgt aufgrund der Anordnung der Federelemente im oder am Anordnungselement, welches parallel zur Sitzfläche des Sitzelementes angeordnet ist und fest mit diesem verbunden ist, wodurch die Federelemente ebenfalls (indirekt) mit dem Sitzelement verbunden sind.

Im Gegensatz dazu ist das automatisch reagierende Verstellelement, welches in diesem Ausführungsbeispiel ein Pendel ist in seinem Drehpunkt mit dem Auflageelement verbunden, wobei das Auflageelement fest an dem Fuß, des Sitzes, der wiederum fest mit dem Fahrzeugboden des Fahrzeuges verbunden ist, angeordnet ist. Somit wird das Auflageelement und folglich der Drehpunkt des Pendels nicht aus seiner Ausgangsposition bei einer Auslenkung oder Neigung des Sitzes bewegt.

Demzufolge verbleibt das Ende des Pendels, welches mit dem einen Ende des Federelementes verbunden ist im Wesentlichen in seiner Ausgangsposition, wobei das andere Ende des Federelementes, welches an dem Anordnungselement befestigt ist der Auslenkung des Anordnungselementes folgt.

Die somit mit Zug- bzw. Druckkraft beaufschlagten Federelemente werden bei einer Ausrichtung des Pendels senkrecht zur Horizontalebene, zusätzlich mit Zug- bzw. Druckkraft beaufschlagten, damit wieder ein Kräftegleichgewicht in der Mitte des Federwegs vorliegt.

Eine Ausrichtung des Pendels senkrecht zur Horizontallinie ist notwendig, wenn das Pendel kurzzeitig aufgrund der plötzlich auftretenden Neigung des Gefälles aus seiner Gleichgewichtslage ausgelenkt wird.

Befindet sich das Sitzelementes bzw. die Fahrerkabine in einer waagerecht ausgerichteten Position, d.h., dass der Sitz bzw. die Fahrerkabine in Bezug auf die Horizontalebene nicht geneigt ist, wird das Federelement nicht belastet, so dass nahezu keine Federkonstante erfordenich ist.

Das Anordnungselement ist ein Element an bzw. in welchem das Federelement angeordnet wird, wobei auch mehrere Federelemente in Reihe oder auch parallel zueinander angeordnet werden können. Ein Ende des Federelementes, welches nicht mit dem automatisch reagierenden Verstellelement verbunden ist, ist an dem Anordnungselement befestigt, womit ermöglicht wird, dass eine entsprechende Kraft von dem Pendel auf die Feder ausgeübt werden kann.

Bei den Federelementen handelt es sich bevorzugt um Spiralfedern und weiterhin bevorzugt um zylindrische Schraubenfedern, welche sowohl mit Zug sowie mit Druck in Bezug auf ihre Federlängsachse beaufschlagt werden können. Jedoch ist auch die Verwendung von anderen Federarten möglich, die hier nicht vollständig explizit aufgeführt werden.

Das Anordnungselement, in bzw. an welchem das Federelement angeordnet ist, wird über mindestens zwei Lager, bevorzugt Loslager an einem Auflageelement gelagert, wobei das Auflageelement beispielsweise den oberen Bereich eines Scherengestelles darstellen kann, in welchem die Scherenarme rotatorisch und/oder translatorisch beweglich angeordnet sind. Folglich sind das Anordnungselement und das Auflageelement parallel zueinander beabstandet.

Aufgrund der Verwendung von Loslagern ist das Anordnungselement über zwei Freiheitsgrade in zwei Richtungen parallel zum Basiselement, also in Längsrichtung zur Fahrtrichtung und in der dazu ausgerichteten Querrichtung, beweglich gelagert. Somit kann sich das Anordnungselement, beispielsweise wenn das Fahrzeug bei einem Gefälle bergab fährt oder auch auf einer ebenen Fahrbahn bremst, gegenüber dem Auflageelement in Fahrtrichtung verschieben, während das Auflageelement beispielsweise über ein Scherengestell fest mit einem Basiselement verbunden ist und keine Positionsänderung in Bezug auf das Basiselement erfährt.

Gleiches gilt bei einem Beschleunigungsvorgang des Fahrzeuges bzw. wenn das Fahrzeug bergauf fährt, wodurch das Anordnungselement zusammen mit dem Sitzelement und der Rückenlehne entgegen der Fahrtrichtung gegenüber dem Auflageelement verschoben wird.

Im Folgenden wird der Vorgang einer Federbewegung zur Federung der Fahrerkabine bzw. des Sitzes anhand des Beispiels einer Längshorizontalfederung beschrieben. Durch diese Horizontalfederung sollen bevorzugt die Positionsänderungen des Sitzes bei einer Neigungen des Sitzes gegenüber der Horizontalebene beispielsweise beim Befahren eines Gefälles oder bei Steigungen bzw. bei einem Beschleunigungs- oder Bremsvorganges derart ausgeglichen werden, dass eine entsprechend gewünschte Federung des Sitzes bei den nachfolgend aufgebrachten Auslenkungen des Sitzes weiterhin möglich ist. Diese Erläuterung lässt sich aber gleichermaßen auf den Vorgang bei einer Querhorizontalfederung beziehen, wenn das Fahrzeug quer zur Fahrtrichtung geneigt wird, wobei sich die Fahrerkabine bzw. der Fahrersitz quer zur Fahrtrichtung gegenüber einer Horizontalebene neigt.

Wird das Fahrzeug z.B. aufgrund eines Gefälles im Gelände bergab bewegt bzw. einem Bremsvorgang unterzogen, wird das erste Federelement, welches mittels des Verstellelementes vorgespannt sein kann und auf der ersten Seite des Verstellelementes angeordnet ist, die zur Fahrtrichtung hin zeigt aufgrund der Hangabtriebskraft bzw. der Fliehkraft mit Zugkraft beaufschlagt, weil hier das Anordnungselement in Fahrtrichtung verschoben wird. Dementsprechend verschiebt sich gleichzeitig auch der erste Federelementbefestigungspunkt, in welchem das erste Federelement mit dem Anordnungselement befestigt ist in Fahrtrichtung, während der Verstellelementbefestigungspunkt, in welchem das erste Federelement mit dem Verstellelement befestigt ist vorzugsweise vorerst in der Ausgangsposition verbleibt. Somit vergrößert sich der Abstand zwischen dem ersten Federelementbefestigungspunk des ersten Federelementes und dem Verstellelementbefestigungspunkt, wodurch das erste Federelement gestreckt wird. Gleichzeitig wird das zweite Federelement, welches ebenfalls mittels des Verstellelementes vorgespannt sein kann und auf der zweiten, der ersten Seite gegenüberliegenden Seite des Verstellelementes angeordnet ist, mit Druckkraft beaufschlagt, weil die Bewegung des Anordnungselementes in Fahrtrichtung auch eine Bewegung eines zweiten Federelementbefestigungspunktes, in welchem das zweite Federelement mit dem Anordnungselement befestigt ist in Fahrtrichtung bedeutet. Währenddessen verbleibt der Verstellelementbefestigungspunkt, in welchem das zweite Federelement mit dem Verstellelement befestigt ist, vorzugsweise vorerst in der Ausgangsposition. Somit verringert sich der Abstand zwischen dem zweiten Federelementbefestigungspunkt und dem Verstellelementbefestigungspunkt, wodurch das zweite Federelement gestaucht wird.

Durch diese Bewegung des Anordnungselementes und dementsprechend der Federelementbefestigungspunkte beispielsweise in Fahrtrichtung wird die Federwegsmitte der Horizontalfedereinrichtung verschoben, wodurch eine Annäherung an die Federwegenden erfolgt. Demzufolge ist das erste Federelement derart gestreckt und das zweite Federelement derart gestaucht, dass nahezu kein Restfederweg mehr verbleibt. Folglich ist es notwendig die Horizontalfedereinrichtung wieder in die Federwegsmitte zu bewegen, um einen ausreichenden Federweg zu gewähneisten.

Um dies zu erreichen, passt sich das automatische Verstellelement der Neigung des Sitzes bzw. der Fahrzeugkabine in Bezug auf die Horizontalebene an, indem es eine erhöhte Gegenkraft zur Hangabtriebskraft bzw. zur Fliehkraft aufbringt, um das Federelement bzw. die Horizontalfedereinrichtung in die Federwegsmitte zurückzuführen. Dadurch erfolgt ein aktiver Hangausgleich, wodurch bei einer Verwendung eines Pendels, einer Luftfeder oder eines anderen Aktors, als ein automatisch reagierendes Verstellelement, eine weiche Federkennlinie realisiert werden kann.

Bei der Verwendung eines Pendels als automatisch reagierendes Verstellelement wird die Pendelmasse stetig von der Erdanziehungskraft angezogen, wobei sich das Pendel bzw. die Pendelmasse, wenn auch möglicherweise leicht zeitverzögert zur Neigung des Sitzelementes, derart zur Horizontalebene ausrichtet, dass die Gerade, welche den Drehpunkt des Pendels und den Massenmittelpunkt der Pendelmasse miteinander verbindet immer senkrecht zu der Horizontalebene ausgerichtet ist.

Auch nach einer kurzzeitigen Auslenkung des Pendels aufgrund eines Beschleunigungs-oder Bremsvorganges des Fahrzeuges ist das Pendel immer bestrebt in seine Gleichgewichtslage zurückzufinden, wodurch sich die Pendelmasse immer derart ausrichtet, dass die Gerade, die sich bei einer Verbindung des Pendelmassenmittelspunktes mit dem Drehpunkt der Pendels bildet, immer senkrecht zur Horizontalebene ausgerichtet ist.

In einem weiteren Ausführungsbeispiel kann das automatisch reagierende Verstellelement eine Welle mit einem Exzenter, eine elektronische Regeleinheit, eine Luftfeder oder auch ein Aktuator sein oder aufweisen.

Demzufolge werden elektronisch regelbare Elemente derart an dem Anordnungselement, dem Sitzelement oder auch dem Auflageelement angeordnet, dass diese eine Neigung des Sitzelementes bzw. der Fahrerkabine gegenüber der Horizontalebene wahrnehmen und eine entsprechende Bewegung der Federelemente bewirken, um die Horizontalfedereinrichtung in die Federwegsmitte zu positionieren.

In einem weiteren Ausführungsbeispiel ist es möglich, dass das automatisch reagierende Verstellelement an ein Trägheitsgetriebe oder auch an einen Rotationsdämpfer angeordnet ist bzw. ein Trägheitsgetriebe oder einen Rotationsdämpfer aufweist. Dadurch ist es möglich, dass das Verstellelement verzögernd auf die Neigung des Sitzelementes gegenüber der Horizoritalebene reagiert, um erst bei fortschreitender Neigung bzw. erhöhter Auslenkung des Sitzes bzw. der Fahrerkabine in Bezug auf die Horizontalebene entsprechend regelnd und steuernd eingreifen zu können, um die Federelemente derart zu bewegen, dass die Horizontalfedereinrichtung zurück in die Federwegsmitte bewegt wird.

Neben der Horizontalfedereinrichtung können weitere Elemente, wie beispielsweise eine Längsfedereinrichtung zur Federung und/oder ein Dämpfer zur Dämpfung an dem Sitzelement bzw. an oder in der Fahrerkabine angeordnet sein.

Als Längsfedereinrichtung kann dabei bevorzugt eine Gasfeder Verwendung finden, die beispielsweise an einem Scherenschenkel eines Scherengestelles angeordnet ist.

Das Scherengestell stellt einen bevorzugten Sitzfuß dar, mit dem das Sitzelement bzw. die Fahrerkabine von einem Basiselement beabstandet wird, wobei das Sitzelement bzw. die Fahrerkabine mittels dieses Scherengestelles höhenverstellbar gegenüber dem Basiselement ist.

An dem Basiselement, welches fest mit dem Fahrzeug bzw. mit dem Fahrzeugboden verbunden ist und keine Eigendynamik aufweist, können die einen Endbereiche der einzelnen Scherenschenkel des Scherengestelles rotatorisch und/oder translatorisch beweglich gelagert sein, während die anderen Endbereiche der Scherenschenkel beispielsweise an dem Auflageelement rotatorisch und/oder translatorisch beweglich angeordnet sind. Weiterhin ist es möglich, dass die Scherenschenkel einander durchdringen oder in einem definierten Bereich drehbar aneinander angeordnet sind. Die verschiedenen Ausführungsformen eines Scherengestelles für einen Sitz sind aus dem allgemein bekannten Stand der Technik hinreichend bekannt und können einen Bestandteil dieses Sitzes mit der erfindungsgemäßen Fahrzeugschwingungsvorrichtung mit Horizontalfederung darstellen.

Weitere Vorteile, Ziele und Eigenschaften der vorliegenden Erfindung werden anhand nachfolgender Beschreibung anliegender Zeichnung erläutert, in welcher beispielhaft bevorzugte Ausführungsformen der erfindungsgemäßen Fahrzeugschwingungsvorrichtung mit Horizontalfedervorrichtung sowie ein Sitz mit erfindungsgemäßer Fahrzeugschwingungsvorrichtung mit Horizontalfedervorrichtung in horizontaler und geneigter Position dargestellt sind.

In den Figuren zeigen:
- Fig. 1a: eine Prinzipskizze eines ersten Ausführungsbeispiels der erfindungsgemäßen Fahrzeugschwingungsvorrichtung mit Horizontalfedervorrichtung in einer zur Horizontalebene waagerechten Position;
- Fig. 1b: eine Prinzipskizze eines zweiten Ausführungsbeispiels der erfindungsgemäßen Fahrzeugschwingungsvorrichtung mit Horizontalfedervorrichtung in einer zur Horizontalebene waagerechten Position;
- Fig. 2: eine Prinzipskizze eines Sitzes mit einem daran angeordnetem ersten Ausführungsbeispiel der erfindungsgemäßen Fahrzeugschwingungsvorrichtung mit Horizontalfedervorrichtung gemäß Fig. 1a und mit einem Scherengestell in einer zur Horizontalebene waagerechten Position; und
- Fig. 3: eine Prinzipskizze eines Sitzes mit einem daran angeordnetem ersten Ausführungsbeispiel gemäß Fig. 1a der erfindungsgemäßen Fahrzeugschwingungsvorrichtung mit Horizoritalfedervorrichtung und mit einem Scherengestell in einer zur Horizontalebene geneigten Position.

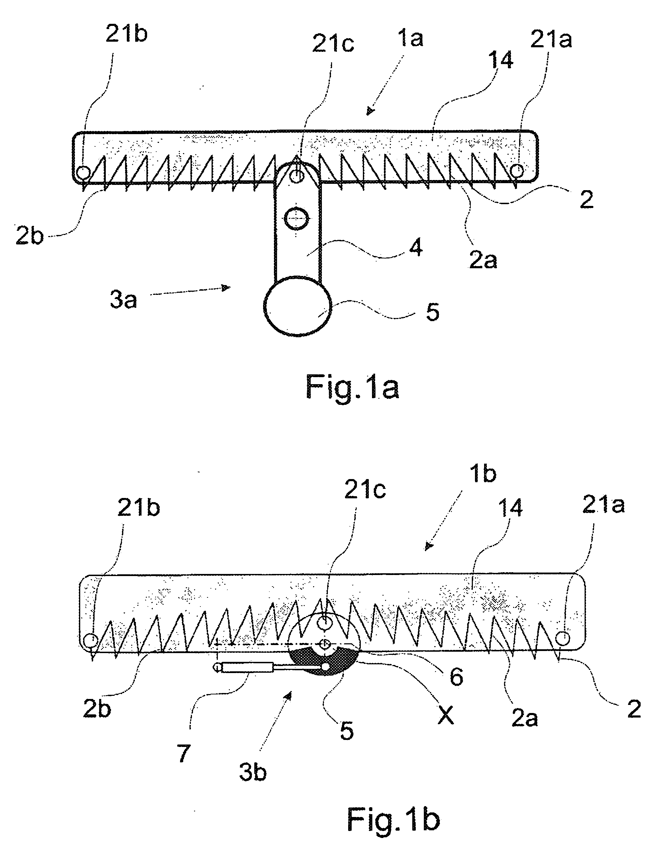

Fig. 1a zeigt eine Prinzipskizze eines ersten Ausführungsbeispieles einer erfindungsgemäßen Fahrzeugschwingungsvorrichtung mit einer Horizontalfedervorrichtung 1a, die sich in einer waagerechten Ausgangsposition befindet, wobei mindestens ein Federelement 2 in bzw. an einem Anordnungselement 14 angeordnet ist, wobei auch mindestens zwei Federelemente 2a, 2b in Reihe oder auch parallel zueinander in bzw. an dem Anordnungselement 14 angeordnet sein können. Bei diesen Federelementen handelt es sich bevorzugt um Spiralfedern und weiterhin bevorzugt um zylindrische Spiralfedern. Werden die zwei Spiralfedern 2a, 2b in Reihe in bzw. an dem Anordnungselement 14 angeordnet, so ist die erste Spiralfeder 2a mit dem einen Ende in einem ersten Federelementbefestigungspunkt 21 a mit dem Anordnungselement 14 verbunden, während die zweite Spiralfeder 2b mit dem einen Ende in einem zweiten Federelementbefestigungspunkt 21 b mit dem Anordnungselement 14 verbunden ist. Folglich sind die beiden Enden der Spiralfedern 2a, 2b, welche am Weitesten voneinander beabstandet sind in den entsprechenden Federelementbefestigungspunkten 21a, 21 b mit dem Anordnungselement 14 verbunden, während die anderen Enden der Spiralfedern 2a, 2b, welche unweit voneinander beabstandet sind oder auch einander berühren können in einem Verstellelementbefestigungspunkt 21 c mit einem Pendel 3a verbunden sind. Es ist auch möglich, dass das Pendel 3a lediglich in der Mitte der Federlängsachse, demzufolge an einer Windung der Spiralfeder an lediglich nur einer in bzw. an dem Anordnungselement 14 befestigten Spiralfeder 2 angeordnet ist und die Spiralfeder 2 folglich in zwei gleich lange Bereiche mit im Wesentlichen identischen Federkonstanten unterteilt. Das Pendel 3a, welches in diesem Ausführungsbeispiel das automatisch reagierende Verstellelement ist, weist einen Pendelschenkel 4 und eine Pendelmasse 5 auf.

Fig. 1b zeigt eine Prinzipskizze eines zweiten Ausführungsbeispieles einer erfindungsgemäßen Fahrzeugschwingungsvorrichtung mit einer Horizontalfedervorrichtung 1 b, die sich in einer waagerechten Ausgangsposition befindet, wobei der Aufbau und die Anordnung der Spiralfedern 2, 2a, 2b zueinander und gegenüber dem Anordnungselement und dem Pendel dem Aufbau und der Anordnung der Spiralfedern 2, 2a, 2b der Figur 1a entspricht. Das Pendel 6 ist an dem Anordnungselement 14 in einem Drehpunkt X drehbar gelagert, wobei das Pendel 6 über einen Rotationsdämpfer 7, der mit seinem einen Ende an der Pendelmasse 5 und mit seinem anderen Ende beispielsweise am Auflageelement 14 angelagert ist, gebremst wird, um eine Änderung der Federvorspannung aufgrund einer schnellen Anregung beispielsweise aufgrund eines kurzen Brems- oder Beschleunigungsvorganges zu verhindern.

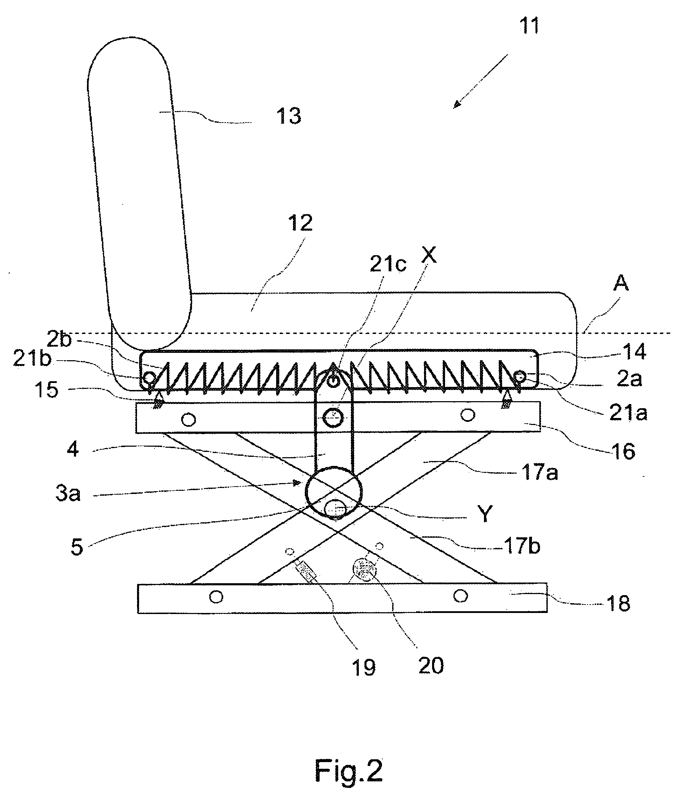

Fig. 2 zeigt eine Prinzipskizze eines Sitzes 11 mit einem daran angeordneten ersten Ausführungsbeispiel der erfindungsgemäßen Fahrzeugschwingungsvorrichtung mit Horizontalfedervorrichtung 1a gemäß Fig. 1a und mit einem Scherengestell, welches mindestens zwei Scherenschenkel 17a, 17b aufweist, wobei der gesamte Sitz 11 sich in einer waagerechten Position, d.h. ohne Neigung zur Horizontalebene A befindet. Der Sitz 11 weist neben dem Sitzelement 12 auch einen Rückenlehne13 auf, die mit dem Sitzelement 12 drehbar bzw. verstellbar verbunden ist. Weiterhin ist die Horizontalfedereinrichtung 1a mit dem Anordnungselement 14 an der unteren Oberfläche des Sitzelementes 12 bzw. innerhalb des Sitzelementes 12 angeordnet, wobei zwei in Reihe angeordneten Spiralfedern 2a, 2b in bzw. an dem Anordnungselement 14 angeordnet sind und jeweils mit ihren Enden, welche am weitesten voneinander beabstandet sind mit dem Anordnungselement 14 in den Federelementbefestigungspunkten 21 a, 21 b und mit den Enden, welche aneinander anliegen mit einem Pendel 6 in dem Verstellelementbefestigungspunkt 21 c verbunden sind. Diese sich in der waagerechten Ausgangsposition befindlichen Spiralfedern 2, 2a, 2b weisen überwiegend eine weiche Federkennlinie bzw. bei einer progressiven Auslegung der Spiralfedern eine niedrige Federkonstante auf. Das höhenverstellbare Scherengestell des Sitzes 11 weißt zwei Scherenschenkel 17a und 17b auf, die einerseits im Basiselement 18 und andererseits im Auflageelement 16 rotatorisch und/oder translatorisch beweglich angeordnet sind und sich in einem Drehpunkt Y schneiden, so dass das Auflageelement 16 höhenverstellbar gegenüber dem Basiselement 18 ist. Das Anordnungselement 14 ist mittels Loslager 15 beweglich auf dem Auflageelement 16 angeordnet und kann sowohl in Längsrichtung als auch in Querrichtung zur Fahrtrichtung gegenüber dem Auflageelement 16 verschoben werden. Das Pendel 3a, welches einen Pendelschenkel 4 und eine Pendelmasse 5 aufweist, ist drehbar an dem Auflageelement in dem Drehpunkt X gelagert, so dass die Pendelmasse 5 frei um den Drehpunkt X schwingen kann. Weiterhin ist das der Pendelmasse gegenüberliegende Ende des Pendels mit den beiden Spiralfedern 2a, 2b in dem Verstellelementbefestigungspunkt 21 c verbunden, um auf die Spiralfedern 2a, 2b bei einer Auslenkung oder Neigung des Sitzes 11 gegenüber der Horizontalebene, A einwirken zu können. Ferner weist die erfindungsgemäße Fahrzeugschwingungsvorrichtung einen Dämpfer 19 und eine Gasfeder 20 auf, welche derart an den Schenkeln 17a, 17b des Scherengestelles angeordnet sind, dass vertikale Stöße abgefedert und diese Abfederungen entsprechend gedämpft werden können.

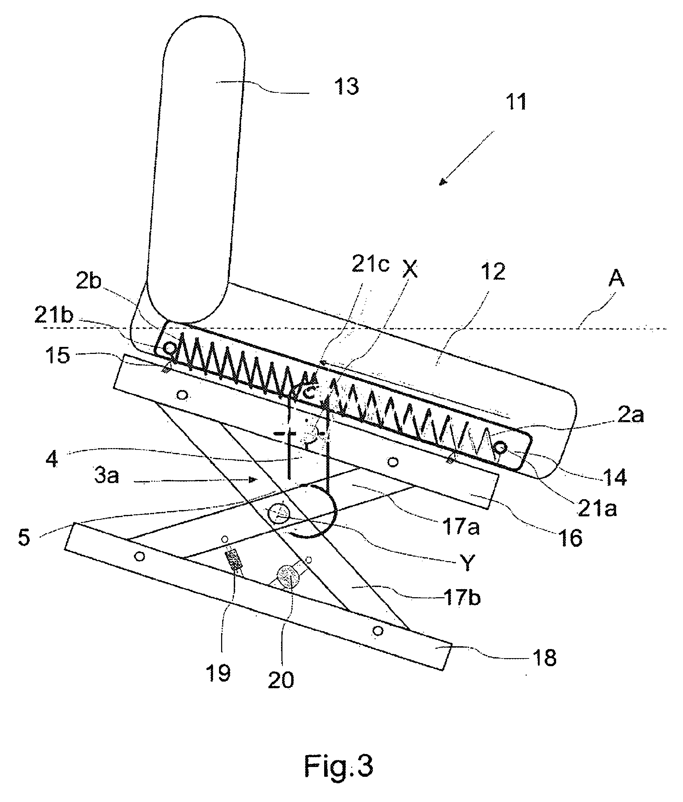

Fig.3 zeigt eine Prinzipskizze eines Sitzes 11 der Fig.2 in einer zur Horizontalebene geneigten Position, aufgrund beispielsweise eines Gefälles. Durch die auf den Sitz 11 einwirkende Hangabtriebskraft wird der Sitz 11 einschließlich der Sitzfläche 12 und der Rückenlehne 13 sowie dem Anordnungselement 14 mit den in Reihe angeordneten Spiralfedern 2a, 2b in Fahrtrichtung verschoben. Kurzzeitig können auch alle drei Befestigungspunkte 21 a, 21 b, 21 c in Fahrtrichtung verschoben werden, da das Pendel 3a ebenfalls kurzzeitig aus seiner Gleichgewichtslage ausgelenkt werden kann. Aufgrund des Bestrebens des Pendels 3a sich immer wieder in seine Gleichgewichtslage auszurichten, wobei sich die Gerade, welche den Massenmittelpunkt der Pendelmasse mit dem Drehpunkt X verbindet, im Wesentlichen senkrecht zu der Horizontalebene ausrichtet, erfolgt eine Auslenkung des Pendels 3a in der Art, dass der Verstellelementbefestigungspunkt 21 c sich in die zur Bewegung des Anordnungselementes 14 entgegengesetzten Richtung bewegt. Bei dieser Bewegung werden die an dem Pendel 3a in dem Verstellelementbefestigungspunkt 21 c befestigten Enden der Spiralfedern 2a, 2b entsprechend mitgeführt, wodurch die erste Spiralfeder 2a in ihrer Federlängsrichtung gestreckt und die zweite Spiralfeder 2b in Ihrer Federlängsrichtung gestaucht wird. Mittels dieser zusätzlich auf die Spiralfedern aufgebrachten Zug- und/oder Druckkräfte wird die eventuell bereits gestreckte erste Spiralfeder 2a, welche mittels einer Zugkraft zusätzlich gestreckt werden würde, derart in Ihre Federwegsmitte zurückgezogen, dass der erste Federelementbefestigungspunkt 21 a sich entgegen der Bewegung des Anordnungselementes 14 bewegt und folglich das Anordnungselement 14 mitführt. Gleichzeitig wird die zweite Spiralfeder 2b, welche sich durch die Bewegung des Anordnungselementes 14 eventuell bereits in einem gestauchten Zustand befindet zusätzlich mit einer Druckkraft beaufschlagt, wodurch die zweite Spiralfedern 2b eine Ausdehnung aufgrund der Federkraft erfährt und folglich der zweite Federelementbefestigungspunkt 21 b entgegen der Bewegung des Anordnungselementes 14 bewegt wird und somit das Anordnungselement 14 wieder in Richtung der Ausgangsposition mitführt.

Durch diese Verstellung des Pendels 3a in seinen Gleichgewichtszustand, durch den sogenannten aktiven Hangausgleich, wird die Federanlenkung und somit die wirkende Federvorspannung verschoben, d.h. es erfolgt eine Positionierung der Horizontalfedereinrichtung in die Federwegsmitte, so dass ein Kräftegleichgewicht in der Mitte des Federwegs vorliegt, womit für nachfolgende Anregungen ein ausreichender Federweg in beiden Richtungen zur Verfügung steht.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1a: erstes Ausführungsbeispiel
- 1b: zweites Ausführungsbeispiel
- 2: Federelement
- 2a: erstes Federelement
- 2b: zweites Federelement
- 3a, 3b: automatisch reagierendes Verstellelement
- 4: Pendelschenkel
- 5: Pendelmasse
- 7: Rotationsdämpfer
- 11: Sitz
- 12: Sitzelement
- 13: Rückenlehne
- 14: Anordnungselement
- 15: Loslager
- 16: Auflageelement
- 17a, 17b: Scherenschenkel
- 18: Basiselement
- 19: Dämpfer
- 20: Gasfeder
- 21 a: erster Federelementbefestigungspunkt
- 21 b: zweiter Federelementbefestigungspunkt
- 21 c: Verstellelementbefestigungspunkt
- A: Horizontalebene
- X: Drehpunkt des Pendels
- Y: Schnittpunkt/Drehpunkt der Scherenschenkel

## Patentansprüche

1. Fahrzeugschwingungsvorrichtung mit einer Horizontalfedereinrichtung (1a, 1b) zur horizontalen Federung eines Sitzelementes (12) und/oder einer Fahrerkabine in Bezug auf ein Basiselement (18), wobei die Horizontalfedereinrichtung (1a, 1b) zwischen dem Sitzelement (12) bzw. der Fahrerkabine und dem Basiselement (18) angeordnet ist und mindestens ein Federelement (2), dessen Federlängsachse sich im Wesentlichen parallel zu einer Oberfläche des Basiselementes (18) erstreckt, umfasst
**dadurch gekennzeichnet, dass**
die Horizontalfedereinrichtung (1a, 1b)
mindestens ein auf Neigungen des Sitzelementes (14) in Bezug auf eine Horizontalebene (A) automatisch reagierendes Verstellelement (3a, 3b), welches zuerst die Federvorspannung des Federelementes (2) erhöht, um danach die Horizontalfedereinrichtung (1a, 1b) in die Federwegsmitte zu positionieren, umfasst.

2. Fahrzeugschwingungsvorrichtung gemäß Anspruch 1,
**dadurch gekennzeichnet, dass**
die Horizontalfedereinrichtung (1a, 1 b) in oder an einer Fahrerkabine angeordnet ist.

3. Fahrzeugschwingungsvorrichtung gemäß Anspruch 1,
**dadurch gekennzeichnet, dass**
die Horizontalfedereinrichtung (1 a, 1 b) in oder an einen Passagiersitz (11) angeordnet ist.

4. Fahrzeugschwingungsvorrichtung gemäß einem der Ansprüche 1 bis 3,
**dadurch gekennzeichnet, dass**
das automatisch reagierende Verstellelement (3a, 3b) ein Pendel (3a, 6) ist, welches drehbar um einen Drehpunkt (X) gelagert ist, wobei eine Gerade, welche den Massenmittelpunkt einer Pendelmasse (5) und den Drehpunkt (X) verbindet senkrecht zu der Horizontalebene (A) ausgerichtet ist, um bei einer Neigung des Sitzelementes (12) in Bezug auf die Horizontalebene (A) das Federelement (2) mittels des Pendels (3a, 6) derart zu beanspruchen, dass die Horizontalfedereinrichtung (1 a, 1 b) in die Federwegsmitte zurück geführt wird.

5. Fahrzeugschwingungsvorrichtung gemäß Anspruch 4,
**dadurch gekennzeichnet, dass**
das Pendel (3a, 6) mit seinem der Pendelmasse (5) abgewandten Ende mit einem Ende des Federelementes (2) verbunden ist.

6. Fahrzeugschwingungsvorrichtung gemäß Anspruch 4 bis 5,
**dadurch gekennzeichnet, dass**
der Drehpunkt (X) zur Lagerung des Pendels (6) in einem Anordnungselement (14) angeordnet ist, wobei in bzw. an das Anordnungselementes (14) das Federelement (2) angeordnet ist.

7. Fahrzeugschwingungsvorrichtung gemäß Anspruch 4 bis 5,
**dadurch gekennzeichnet, dass**
das Pendel (3a) einen Pendelschenkel (4) und die Pendelmasse (5) aufweist.

8. Fahrzeugschwingungsvorrichtung gemäß Anspruch 7,
**dadurch gekennzeichnet, dass**
der Pendelschenkel (4) des Pendel (3a) derart drehbar an einem Auflageelement (16) gelagert ist, so dass die Pendelmasse (5) in Bezug auf das Auflageelement (16) zwischen dem Auflageelement (16) und dem Basiselement (18) frei schwingen kann.

9. Fahrzeugschwingungsvorrichtung nach einem der Ansprüche 3 bis 8,
**dadurch gekennzeichnet, dass**
mindestens ein Ende des Federelementes (2) mit dem Anordnungseiernent (14) verbunden ist.

10. Fahrzeugschwingungsvorrichtung nach einem der vorangegangenen Ansprüche,
**dadurch gekennzeichnet, dass**
das Anordnungselement (14) über mindestens zwei Loslager (15) beweglich in Längs- und/oder Querrichtung in Bezug zur Sitz- bzw. Fahrerkabinenlängsrichtung auf einem Auflageelement (16) angeordnet ist.

11. Fahrzeugschwingungsvorrichtung gemäß Anspruch 1,
**dadurch gekennzeichnet, dass**
das automatisch reagierende Verstellelement (3a, 3b) eine Weite mit einem Exzenter, eine elektronische Regeleinheit oder ein Aktuator ist.

12. Fahrzeugschwingungsvorrichtung gemäß Anspruch 1,
**dadurch gekennzeichnet, dass**
das automatisch reagierende Verstellelement (3a, 3b) an ein Trägheitsgetriebe oder einen Rotationsdämpfer (7) angeordnet ist, um verzögernd auf eine Neigung des Sitzelementes (12) zu reagieren.

13. Fahrzeugschwingungsvorrichtung nach einem der vorangegangenen Ansprüche,
**dadurch gekennzeichnet, dass**
das Sitzelement (12) mittels eines Scherengestelles (17a, 17b) höhenverstellbar in Bezug auf das Basiselement (18) ist und folglich mittels des Scherengestellens (17a, 17b) von dem Basiselement (18) beabstandet ist.

## Claims

1. A vehicle vibration apparatus with a horizontal spring device (1 a, 1 b) for the horizontal springing of a seat element (12) and/or a driver's cab with respect to a base element (18), wherein the horizontal spring device (1a, 1b) is arranged between the seat element (12) or the driver's cab respectively and the base element (18), and comprises at least one spring element (2), the longitudinal axis of which extends substantially parallel to a surface of the base element (18), **characterized in that** the horizontal spring device (1a, 1b) comprises at least one adjustment element (3a, 3b) which reacts automatically to inclinations of the seat element (14) with respect to a horizontal plane (A) and which first increases the spring pre-stressing of the spring element (2) in order subsequently to position the horizontal spring device (1a, 1b) in the centre of the spring path.

2. A vehicle vibration apparatus according to claim 1, **characterized in that** the horizontal spring device (1a, 1 b) is arranged in or on a driver's cab.

3. A vehicle vibration apparatus according to claim 1, **characterized in that** the horizontal spring device (1a, 1 b) is arranged in or on a passenger seat (11).

4. A vehicle vibration apparatus according to any one of claims 1 to 3, **characterized in that** the automatically reacting adjustment element (3a, 3b) is a pendulum (3a, 6) which is mounted so as to be rotatable about a fulcrum (X), wherein a straight line which connects the centre point of a pendulum mass (5) and the fulcrum (X) is orientated at a right angle to the horizontal plane (A) in order to stress the spring element (2) by means of the pendulum (3a, 6) in the event of an inclination of the seat element (12) with respect to the horizontal plane (A), in such a way that the horizontal spring device (1 a, 1b) is guided back into the centre of the spring path.

5. A vehicle vibration apparatus according to claim 4, **characterized in that** the pendulum (3a, 6) is connected by its end facing away from the pendulum mass (5) to an end of the spring element (2).

6. A vehicle vibration apparatus according to claims 4 to 5, **characterized in that** the fulcrum (X) for mounting the pendulum (6) is arranged in an arrangement element (14), wherein the spring element (2) is arranged in or on the arrangement element (14) respectively.

7. A vehicle vibration apparatus according to claims 4 to 5, **characterized in that** the pendulum (3a) has a pendulum arm (4) and the pendulum mass (5).

8. A vehicle vibration apparatus according to claim 7, **characterized in that** the pendulum arm (4) of the pendulum (3a) is mounted in a rotatable manner on a support element (16) in such a way that the pendulum mass (5) can oscillate freely between the support element (16) and the base element (18) with respect to the support element (16).

9. A vehicle vibration apparatus according to any one of claims 3 to 8, **characterized in that** at least one end of the spring element (2) is connected to the arrangement element (14).

10. A vehicle vibration apparatus according to any one of the preceding claims, **characterized in that** the arrangement element (14) is arranged on a support element (16) by way of at least two loose bearings (15) so as to be movable in the longitudinal and/or transverse direction with respect to the longitudinal direction of the seat or driver's cab respectively.

11. A vehicle vibration apparatus according to claim 1, **characterized in that** the automatically reacting adjustment element (3a, 3b) is a shaft with an eccentric, an electronic regulating unit or an actuator.

12. A vehicle vibration apparatus according to claim 1, **characterized in that** the automatically reacting adjustment element (3a, 3b) is arranged on an inertial gear mechanism or a rotation-damping means (7) in order to react with a delay to an inclination of the seat element (12).

13. A vehicle vibration apparatus according to any one of the preceding claims, **characterized in that** the seat element (12) is height adjustable with respect to the base element (18) by means of a scissor frame (17a, 17b) and consequently it is arranged at a distance from the base element (18) by means of the scissor frame (17a, 17b).

## Revendications

1. Dispositif vibrant pour véhicule, avec un dispositif de suspension horizontale (1a, 1b) assurant la suspension horizontale d'un élément de siège (12) et/ou d'une cabine de conduite par rapport à un élément de base (18), dans lequel le dispositif de suspension horizontale (1a, 1b) est agencé entre l'élément de siège (12) respectivement, ou la cabine de conduite, et l'élément de base (18), et comprend au moins un élément de ressort (2), dont l'axe longitudinal de ressort s'étend sensiblement parallèlement à une surface de l'élément de base (18), **caractérisé en ce que**
le dispositif de suspension horizontale (1a, 1 b) comprend au moins un élément de réglage (3a, 3b), réagissant automatiquement à des inclinaisons de l'élément de siège (14) par rapport à un plan horizontal (A), élément de réglage qui d'abord augmente la pré-tension de l'élément de ressort (2), pour ensuite positionner le dispositif de suspension horizontale (1a, 1 b) au milieu de la course du ressort.

2. Dispositif vibrant pour véhicule selon la revendication 1, **caractérisé en ce que** le dispositif de suspension horizontale (1a, 1 b) est agencé dans ou contre une cabine de conduite.

3. Dispositif vibrant pour véhicule selon la revendication 1, **caractérisé en ce que** le dispositif de suspension horizontale (1a, 1b) est agencé dans ou contre un siège passager(11).

4. Dispositif vibrant pour véhicule selon l'une des revendications 1 à 3, **caractérisé en ce que** l'élément de réglage réagissant automatiquement (3a, 3b) est un pendule (3a, 6), qui est logé en rotation autour d'un centre de rotation (X), dans lequel une droite qui relie le centre de gravité d'une masse de pendule (5) et le centre de rotation (X) est orientée perpendiculairement au plan horizontal (A), pour, lors d'une inclinaison de l'élément de siège (12) par rapport au plan horizontal (A), solliciter l'élément de ressort (2) au moyen du pendule (3a, 6) de façon telle que le dispositif de suspension horizontale (1 a, 1 b) est ramené au milieu de la course du ressort.

5. Dispositif vibrant pour véhicule selon la revendication 4, **caractérisé en ce que** le pendule (3a, 6) est, par son extrémité opposée à la masse du pendule (5), relié à une extrémité de l'élément de ressort (2).

6. Dispositif vibrant pour véhicule selon les revendications 4 et 5, **caractérisé en ce que** le centre de rotation (X), pour assurer le logement du pendule (6), est agencé dans un élément d'agencement (14), l'élément de ressort (2) étant agencé dans ou contre l'élément d'agencement (14).

7. Dispositif vibrant pour véhicule selon les revendications 4 et 5, **caractérisé en ce que** le pendule (3a) présente un bras de pendule (4) et la masse de pendule (5).

8. Dispositif vibrant pour véhicule selon la revendication 7, **caractérisé en ce que** le bras (4) du pendule (3a) est logé en rotation contre un élément de support (16) de telle sorte que la masse de pendule (5) puisse vibrer librement par rapport à l'élément de support (16) entre l'élément de support (16) et l'élément de base (18).

9. Dispositif vibrant pour véhicule selon l'une des revendications 3 à 8, **caractérisé en ce qu'**au moins une extrémité de l'élément de ressort (2) est reliée à l'élément d'agencement (14).

10. Dispositif vibrant pour véhicule selon l'une des revendications précédentes, **caractérisé en ce que** l'élément d'agencement (14) est, via au moins deux paliers libres (15), agencé sur un élément de support (16) de façon à pouvoir se mouvoir dans la direction longitudinale et/ou transversale par rapport à la direction longitudinale du siège ou de la cabine de conduite.

11. Dispositif vibrant pour véhicule selon la revendication 1, **caractérisé en ce que** l'élément de réglage réagissant automatiquement (3a, 3b) est un arbre muni d'un excentrique, une unité de régulation électronique ou un actionneur.

12. Dispositif vibrant pour véhicule selon la revendication 1, **caractérisé en ce que** le dispositif de réglage réagissant automatiquement (3a, 3b) est agencé contre un engrenage à inertie ou un amortisseur rotatif (7), pour réagir avec retard à une inclinaison de l'élément de siège (12).

13. Dispositif vibrant pour véhicule selon l'une des revendications précédentes, **caractérisé en ce que** l'élément de siège (12) est réglable en hauteur par rapport à l'élément de base (18) au moyen d'un montage en ciseau (17a, 17b), et se trouve en conséquence distancé de l'élément de base (18) au moyen du montage en ciseau (17a, 17b).
